## Europäisches Patentamt
## European Patent Office
## Office européen des brevets

(11) Publication number: **0 339 152 B1**

## EUROPEAN PATENT SPECIFICATION

(45) Date of publication of patent specification: **11.08.93**

(51) Int. Cl.5: **C21D 9/14**, C21D 1/42, B62D 55/205

(21) Application number: **88303890.3**

(22) Date of filing: **28.04.88**

(54) Heat treatment process for bushing used in track of endless track tractor.

(43) Date of publication of application:
**02.11.89 Bulletin 89/44**

(45) Publication of the grant of the patent:
**11.08.93 Bulletin 93/32**

(84) Designated Contracting States:
**DE GB IT**

(56) References cited:
**DE-C- 881 352**
**GB-A- 485 753**
**US-A- 3 567 529**
**US-A- 4 210 468**

**PATENT ABSTRACTS OF JAPAN, vol. 8, no. 189 (M-321)[1626], 30 August 1984; & JP-A-59 77979 (Topy Kogyo K.K.) 04-05-1984**

**PATENT ABSTRACTS OF JAPAN, vol. 10, no. 4 (C-322)[2061], 09 January 1986; & JP-A-60 162728 (Ishikawajima Harima Jukogyo K.K.) 24-08-1985**

(73) Proprietor: **TOPY INDUSTRIES, LIMITED**
**5-9, Yonbancho Chiyoda-ku**
**Tokyo 102(JP)**

(72) Inventor: **Sahara, Takahiko, c/o Topy Industries Ltd.**
**5-9, Yonbancho**
**Tokyo(JP)**
Inventor: **Kusano, Hisahiko, c/o Topy Industries Ltd.**
**5-9, Yonbancho**
**Chiyoda-ku, Tokyo(JP)**
Inventor: **Kaneko, Masayoshi, c/o Topy Industries Ltd.**
**5-9, Yonbancho**
**Chiyoda-ku, Tokyo(JP)**
Inventor: **Nakajima, Masahiro, c/o Topy Industries Ltd.**
**5-9, Yonbancho**
**Chiyoda-ku, Tokyo(JP)**
Inventor: **Sato, Toshihiko, c/o Topy Industries Ltd.**
**5-9, Yonbancho**
**Chiyoda-ku, Tokyo(JP)**

(74) Representative: **Ben-Nathan, Laurence Albert et al**
**Urquhart-Dykes & Lord 91 Wimpole Street**
**London W1M 8AH (GB)**

## Description

(Technical Background)

This invention relates to a bushing which is a component part of a track used for endless track tractors such as bulldozers and power shovels, and more particularly to an effective heat treatment of a bushing for enhancing the wear resistance, strength, toughness and fatigue strength of bushings.

(Prior Art)

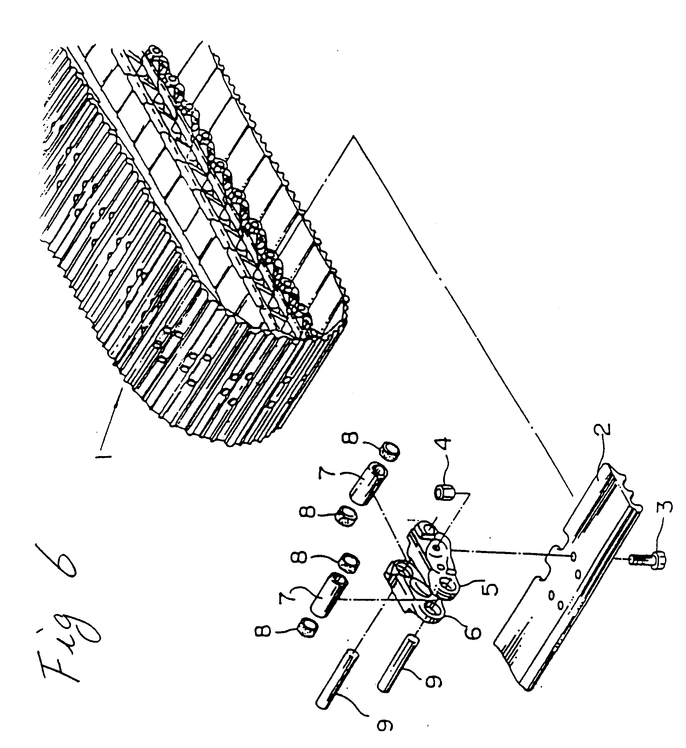

The tracks used for endless track tractors have the structure shown in FIG. 6.

The conventional track 1 comprises a pair of links 5, 6 which contact a large number of tracker rollers (not shown) on the side of the endless track tractor, pins 9 which join said links in the longitudinal direction thereof, bushings 7 which cover the outer peripheral surface of said pin 9, dust-seals 8 interposed between the ends of said bushings 7 and said links 5, 6, and shoes 2 which are fixed with bolts 3 and nuts 4 on the surface of said links 5, 6 opposing the side contacting the tracker rollers. These components form one block, and the blocks are coupled in an endless manner to form a track 1.

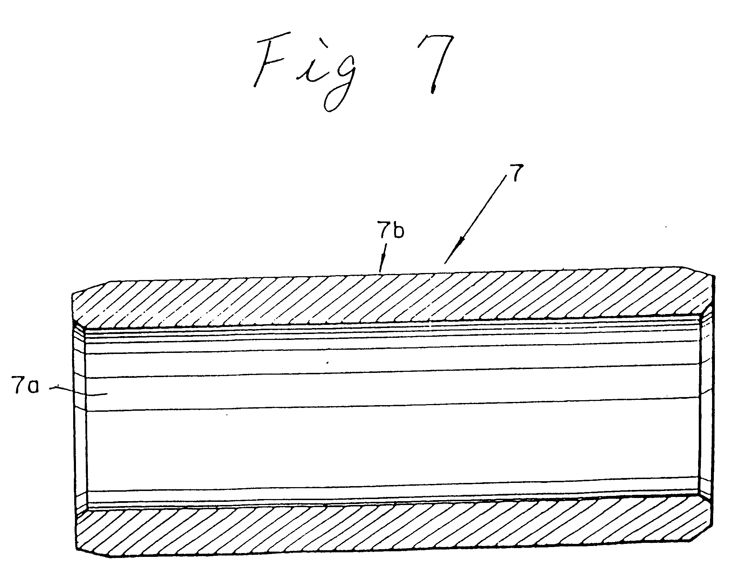

Each of the bushings 7 mentioned above is shaped like a hollow cylinder to allow insertion of a pin 9, and moreover, as shown in enlargement in FIG. 7, the outer peripheral surface 7b thereof is engaged with sprockets (not shown) for driving the endless track when the tractor is running. The inner and outer peripheral surfaces thereof should therefore have high wear resistance. Bushings 7 should also have strength, toughness and fatigue strength which can withstand loads imposed thereon.

In order to meet such severe conditions, bushings for tracks are given various heat treatments in the prior art.

For example, the method disclosed in Japanese Patent Publication No. Sho 52-34806 uses steel for case hardening (e.g., ISO 683-11, 18CrMo4) as a raw material, and carburizes, hardens and then tempers the material.

Japanese Patent Application laid open under No. Sho 59-77979 discloses another heat treatment method in which a raw material of medium carbon low alloy steel, such as ISO 683-1, 34CrMo4 or 41CrMo4 or 34Cr4 with boron, is subjected to thermal refining to form a malleable region (sorbite texture) at the core of the thickness, hardened by induction method on both outer and inner peripheral surfaces and then tempered.

The first method, however, is defective in that it requires a long time for heat treatment to thereby push up costs, and therefore it is not very practical. The second method is also defective in that it takes a long time and a large number of steps in processing as medium carbon low alloy steel is heated to $Ac_3$ transformation temperature or higher in a heating furnace, oil quenched (quenching by immersion in oil or oil spraying) so as to transform the texture into martensite, and then tempered at a temperature of around 600°C for thermal refining. The efficiency in processing work is therefore not quite satisfactory.

Applicants of this invention have proposed an induction hardening method for track bushings which does not require thermal refining of the raw material (Japanese Patent Application Lay-open No. Sho 59-77979).

The method of JP-59-77979 comprises three stages and is most practical. The first stage of this method comprises the step of hardening a cylindrical bushing material with an induction heating coil from the outer peripheral surface toward the inner peripheral side thereof while the material bushing is being rotated in the circumferential direction in respect of its central axis so as to limit the hardness of the inner circumferential surface below critical hardness (ca. HRC 40 or less), and at the same time maintain the hardness of the region extending from the outer peripheral surface to a part of the hardened layer on the inner circumferential side at the level higher than the critical hardness; the second stage of the method comprises the step of water cooling the outer peripheral surface of the material bushing while it is being rotated, and simultaneously hardening the inner circumferential side with induction heating so as to form an effectively hardened layer on the outer circumferential region and an effectively hardened layer on the inner circumferential region, and to form a tempered layer between both effective hardened layers which has a hardness smaller than the critical hardness; the third stage comprises the steps of tempering thus processed bushing material at low temperature.

US-A-3,567,529 discloses a heat treatment process for cylindrical bushings for endless tracks according to which a bushing is hardened and tempered so as to produce an inner peripheral portion thereof lower in hardness than an outer peripheral portion of the bushing. The inner and outer peripheral portions are separated by an untreated core portion which has a hardness lower than that of either the inner or the outer peripheral portions.

(Disclosure of the Invention)

The first object of this invention is to enhance the productivity and to reduce the cost by decreasing the number of necessary steps in the heat treatment with induction heating for bushings.

The second object of this invention is to provide a heat treatment process which does not deteriorate the wear resistance, fatigue strength and toughness of the bushings.

In order to achieve aforementioned objects, this invention provides a heat treatment process according to Claim 1.

According to this invention method, tempering may be conducted in a furnace within the temperature range of 150°C to 250°C so as not to impair the practically effective hardness acquired by the hardening.

This invention heat treatment process may also include a step of heating the inner circumferential surface to 200°C or 250° in the step of induction tempering, so that the outer peripheral side is tempered at a temperature (ca. 170°C) lower than the temperature of the inner circumferential surface by using the conductive heat transmitted from the inner circumferential surface to thereby decrease the hardness on the inner circumferential surface of the bushing to ca. HRC 50 - 60 and thereby maintain that on the outer peripheral surface at a level substantially obtained by hardening.

(Brief Description of the Drawings)

FIG. 1 is a graph to show cross sectional hardnesses (Rockwell hardness) of a bushing manufactured by this invention process in terms of the distances from the outer and the inner surfaces.

FIG. 2 is a graph to compare the number of load cycles for fatigue crack generation between this invention bushing and prior art bushings by applying different loads.

FIG. 3 is a graph to compare the crushing load between this invention bushing and prior art bushings.

FIG. 4 is a graph to compare the number of load cycles for fatigue crack generation between this invention bushing and prior art bushings in terms of austenite grain size number when applied with a load of 18.7 tons (high load region).

FIG. 5 is a graph to show distribution of residual stress on a bushing obtained by this invention process.

FIG. 6 shows a known track for endless track tractors and a partially exploaded perspective view thereof.

FIG. 7 is an enlarged longitudinal section of the bushing shown in FIG. 6.

(Detailed Description of the Invention)

This invention relates to a heat treatment process to obtain a bushing with excellent wear resistance, toughness, and fatigue strength which is used in a track of endless track tractors. This invention method will be described by referring to a preferable example in more detail.

A test piece of the bushing for tracks according to this invention method is obtained by machining medium carbon low alloy steel into a cylindrical form.

The test pieces used as the medium carbon low alloy steel was medium carbon chromium boron steel shown in Table 1.

EP 0 339 152 B1

Table 1:   Chemical composition of test pieces (%)

| C | Si | Mn | P | S |
|---|-----|------|-------|-------|
| 0.42 | 0.25 | 0.79 | 0.012 | 0.017 |

| Cu | Cr | Al | Ti | B |
|------|------|-------|-------|--------|
| 0.01 | 1.10 | 0.034 | 0.024 | 0.0021 |

This invention process comprises a first stage and a second stage: i.e. a step of hardening the entire thickness of a bushing by heating the outer peripheral surface of a bushing material with induction until the inner circumferential surface thereof reaches the temperature in the range of $Ac_3 \leq T \leq Ac_3 + 50°$ (T [°C] : the temperature reached by heating the inner circumferential surface, $Ac_3$ [°C] : transformation temperature) and cooling the outer peripheral surface of bushing material and a step of tempering thus processed bushing.

In the first step, the test piece of bushing for track is subjected to induction heating from the outer peripheral surface of its cylindrical form and cooling from the outer peripheral surface of its cylindrical form to thereby harden the entire thickness thereof.

In the process of hardening, induction frequency of 2.5 KHz is used, and the induction heating condition is adjusted to raise the temperature on the inner circumferential surface of the bushing to the range of $Ac_3 \leq T \leq Ac_3 + 50°$ (T [°C] : the temperature reached by heating the inner circumferential surface, $Ac_3$ [°C] : transformation temperature). If T is below $Ac_3$, the hardening would not prevail over the entire thickness, and if T is higher than $Ac_3 + 50$, austenite grain on or near the inner circumferential surface would coarsen. This is not preferable.

Under the conditions mentioned above, finer austenite grain size is obtained on or near the inner circumference of a bushing as shown in Table 2.

4

Table 2:   Austenite grain size number of the bushing

obtained by this invention process

| T.P.No measurement points | near outer peripheral surface | near inner peripheral surface |
|---|---|---|
| No. 1 | 6.0 | 9.4 |
| No. 2 | 6.4 | 9.4 |

Note:   Austenite grain size is measured by ISO: 643

The second step of this invention process comprises the step of tempering the test piece which has been subjected to hardening in the first step. The tempering method may be either the tempering-in-furnace method which heats the test pieces in an oven at the temperature of 150 - 250°C or the induction heating method which heats the inner circumferential surface of a bushing.

In the test, test pieces were tempered in a furnace at 200°C. The temperature range of 150 - 250°C used in the process is a range which allows tempering without impairing the practically effective hardness acquired by hardening.

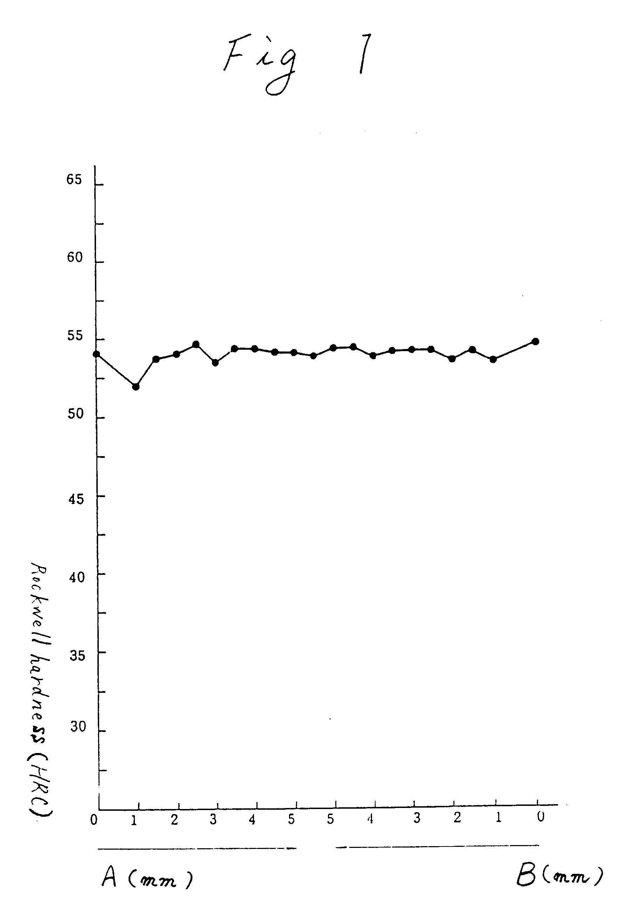

The test pieces of the bushing thus obtained from the first and the second steps were measured for hardness distribution in the direction of thickness and the result is shown in FIG. 1. In the graph of FIG. 1, the vertical axis represents Rockwell hardness expressed in the unit of HRC while the horizontal axis represents the distance from the inner circumferential surface of a bushing in the left half of the graph (A/mm), and from the outer peripheral surface thereof in the right half of the graph (B/mm).

Results of the test conducted by the presents applicants showed that substantially uniform hardness is distributed over the outer peripheral surface, core and inner circumferential surface of a bushing.

If the hardness is in the range of Rockwell hardness HRC 50 or a slightly higher, it provides sufficient wear resistance on the inner circumferential surface and the outer peripheral surface of a bushing.

When a bushing material is tempered with induction heating from the inner circumferential surface of a bushing in relation to the above tempering method, the outer peripheral side may be tempered with the conductive heat transmitted from the inner circumferential surface to enhance the economy of the process.

In such a case, the inner circumferential surface of a bushing sample is heated to 200 - 250°C and at the same time the outer peripheral side is tempered at a temperature (ca. 170°C) lower than that of the inner surface so that the hardness of the inner circumferential surface is reduced to ca. HRC 50 - 60 while the hardness of the outer peripheral surface is conveniently maintained at the hardness of the substantially same level obtained by hardening.

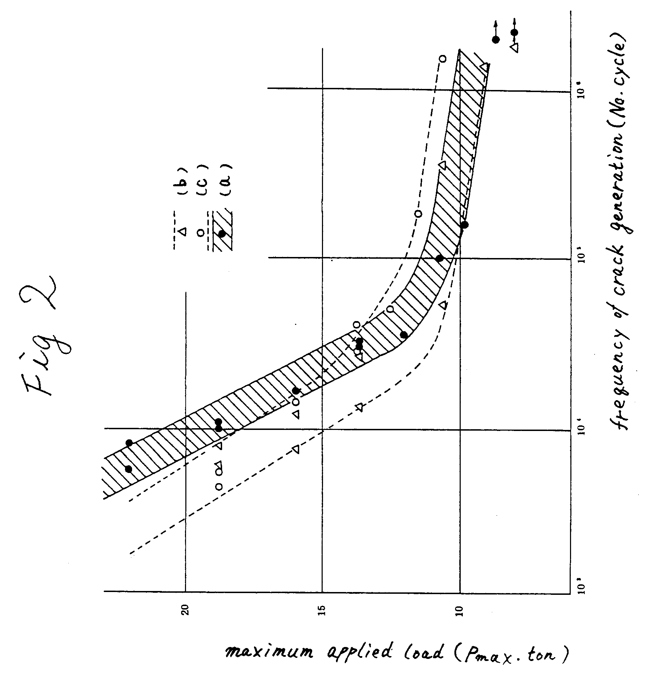

FIG. 2 is a graph to show the result of a comparison of fatigue characteristics of this invention bushing with prior art bushings (vertical axis : maximum applied load, horizontal axis : number of cycles for fatigue crack generation). The test pieces used were medium carbon chromium boron steel shown in Table 1, which were hardened by this invention process (tempering in a furnace) and by the prior art process.

As is obvious from FIG. 2, the fatigue characteristic of this invention method bushing (a) is comparable to that of the prior art product which was induction hardened with thermal refining and tempered in a furnace (b) and another prior art product which was induction hardened without thermal refining and tempered in a furnace (c). This invention process product has a quality substantially equal to that of the prior art products.

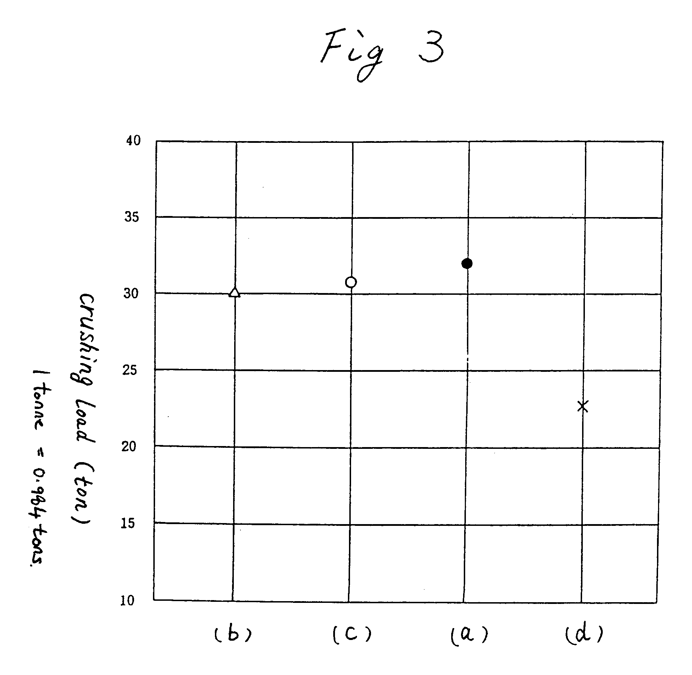

FIG. 3 is a graph to show the result of comparison of a crushing characteristic of this invention product (a) with prior art test samples (vertical axis : crushing load, horizontal axis : test samples).

As is obvious from FIG. 3, the crushing characteristic of the product prepared by this invention method (a) is at least equal to or higher than that of the test piece b) which was induction hardened with thermal refining and tempered in a furnace, and the test piece (c) which was induction hardened without thermal refining and tempered in a furnace, and the test piece (d) which was hardened through the entire thickness thereof by oil quenching and tempered in a furnace.

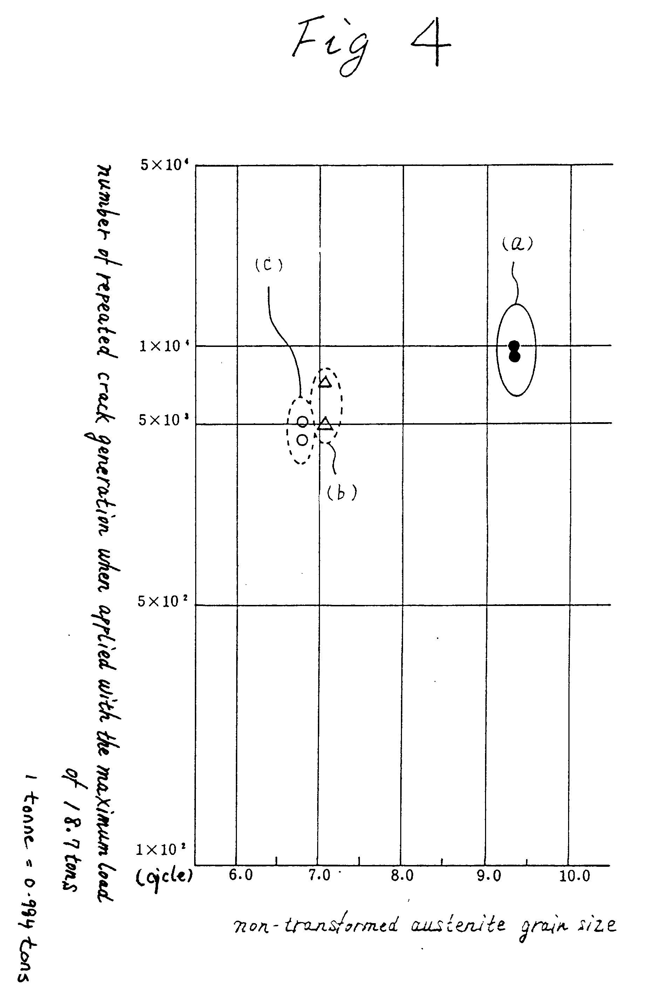

FIG. 4 shows the relation of the number of load cycles for fatigue crack generation in the high load region substantially comparable to the weight of an endless track tractor such as a power shovel (vertical axis : number of load cycles for fatigue crack generation when applied with the maximum load of 18.7 tons) with the austenite grain size on or near the inner circumferential surface (horizontal axis : austenite grain size number) of a bushing for test samples of FIG. 3.

From FIG. 4, one can easily understand that the finer the grain size, the greater becomes the number of load cylces for fatigue crack generation in a high load region. In other words, the cracks occur less frequently.

FIG. 4 also shows that while the austenite grain size number of the prior art test pieces (b) and (c) are 7.2 and ca. 7.0, that of the test piece (a) prepared by this invention process is 9.0 or higher. This demonstrates that as the grain size becomes finer, the resistance against fatigue cracks of this invention product is enhanced over the prior art.

For the test pieces which were hardened by heating and cooling only from the outer peripheral surface and then tempered, compressive residual stress is observed on or near the inner circumferential surface.

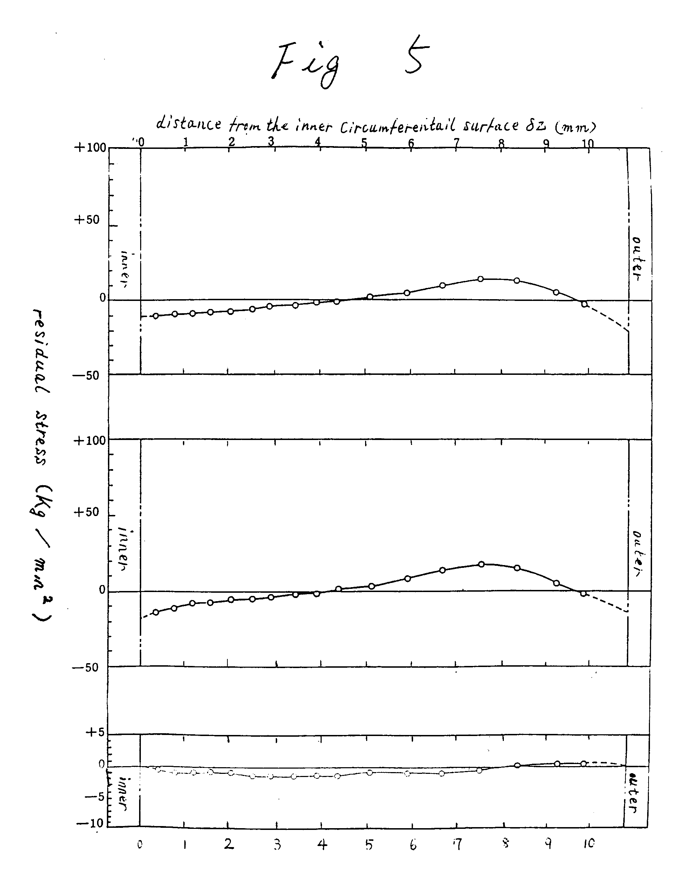

FIG. 5 shows in a graph residual stress distribution of a test piece which was prepared from a medium carbon low alloy steel of the same chemical composition as above by this invention process (tempered in a furnace) (vertical axis : residual stress, horizontal axis : distance from the inner circumferentail surface).

As is obvious from FIG. 5, the residual stress becomes compressive on or near the inner circumferential surface. The test samples tempered by said second step can be finished simply by grinding the outer peripheral surface.

Obtained products are incorporated with pins in use in order to couple a large number of link pairs which contact a large number of tracker rollers.

According to this invention, when a bushing for track made of medium carbon low alloy steel is processed by induction hardening, the outer peripheral surface thereof is subjected to induction heating until the temperature of the inner circumferential surface reaches a range of $Ac_3 \leq T \leq Ac_3 + 50$ (T [°C]: temperature reached by heating the inner circumferential surface, $Ac_3$ [°C] : transformation temperature), and cooling so as to harden the bushing material along the entire thickness, and then tempering the bushing material.

This invention process can eliminate steps of the cumbersome thermal refining process before induction hardening and the induction hardening process on inner circumferential side of a bushing in the process of induction hardening to thereby reduce the number of steps in heat treatment.

Further, this invention process can harden a bushing along the entire thickness thereof at HRC 50 - 62 by hardening to thereby maintain the wear resistance on the inner circumference and the outer periphery surfaces of a bushing at an excellent level.

Even though the bushing is hardened over the entire thickness, as the method uses induction heating only on the outer peripheral surface, the inner circumferential surface temperature can be controlled within the range of $Ac_3 \leq T \leq Ac_3 + 50$ (T [°C]: temperature reached by heating the inner circumferential surface, $Ac_3$ [°C]: transformation temperature) to thereby inhibit the coarsening and promote fining of austenite grain on or near the inner circumferential surface. The fatigue strength and toughness of the product by this invention process can therefore be made comparable to or higher than prior art products.

As compressive residual stress is produced on or near the inner circumferential surface by combining induction hardening which heats and cools only the outer peripheral surface with subsequent tempering, the fatigue strength thereof can be increased.

As this embodiment of the invention conducts the tempering step in the temperature range of 150°C to 250°C in a furnace, it can prevent impairment of practically effective hardness acquired by hardening.

This embodiment can also save energy used in the tempering process as well as reduce the hardness on the inner circumferential surface to HRC 50 - 60 and maintain the hardness on the outer peripheral surface at substantially the same level obtained by hardening since the method heats the inner circumferential surface of a bushing to 200°C to 250°C, and uses the conductive heat transmitted from the inner circumferential surface for tempering the outer peripheral side at a lower temperature than the inner circumferential side.

**Claims**

1. A heat treatment process, for bushings having inner circumferential and outer peripheral surfaces and used in tracks or endless track tractors, and being capable of being hardened by induction heating, the bushings being made of medium carbon low alloy steel, which process comprises induction heating the bushing, cooling the bushing to harden the entire thickness thereof, and tempering the bushing, characterized in that the induction heating of the bushing is carried out by heating the outer peripheral surface of the bushing until the inner circumferential surface thereof reaches the temperature range of $Ac3 \leq T \leq Ac3 + 50°C$, wherein T is the temperature in $°C$ reached by heating the inner circumferential surface, and Ac3 is the transformation temperature $°C$ of the low alloy steel, and the cooling process is effected by cooling the bushing from the outer peripheral surface thereof.

2. A heat treatment for bushing as claimed in Claim 1 wherein in the step of tempering in said series of heat treatment processes, the bushing is subjected to tempering in a heating furnace in the temperature range of $150°C$ to $250°C$.

3. A heat treatment for bushing as claimed in Claim 1 wherein in the tempering step of said series of heat treatment processes, the bushing is heated from the inner circumferential surface with induction heating to temper the inner circumferential side.

4. A heat treatment for bushing as claimed in Claim 1 wherein in the tempering step in said series of heat treatment processes, the outer peripheral side of the bushing is tempered at a temperature lower than that of the inner circumferential side by using the conductive heat transmitted from the inner circumferential side.

**Patentansprüche**

1. Verfahren zur Wärmebehandlung von Buchsen, die innere Umfangs- und äußere Umfangsflächen haben und in Gleisketten oder Gleiskettenschleppern verwendet werden, sowie für ein Härten durch eine Induktionserwärmung geeignet sind, wobei die Buchsen aus einem niedrig legierten Stahl hergestellt sind und wobei das Verfahren ein Induktionserwärmen der Buchse, ein Kühlen der Buchse für ein Härten ihrer gesamten Dicke und ein Tempern der Buchse umfaßt, dadurch gekennzeichnet, daß das Induktionserwärmen der Buchse durch ein Erwärmen der äußeren Umfangsfläche der Buchse durchgeführt wird, bis deren innere Umfangsfläche den Temperaturbereich $Ac3 \leq T \leq Ac3 + 50°C$ erreicht, wobei T die Temperatur in $°C$ ist, die durch ein Erwärmen der inneren Umfangsfläche erreicht wird, und Ac3 die Umwandlungstemperatur in $°C$ des niedrig legierten Stahls ist, und der Kühlvorgang durch ein Kühlen der Buchse von der äußeren Umfangsfläche her bewirkt wird.

2. Wärmebehandlung für eine Buchse nach Anspruch 1, bei welcher in der Stufe des Temperns in der Reihe von Wärmebehandlungsverfahren die Buchse dem Tempern in einem Wärmeofen in dem Temperaturbereich von $150°C$ bis $250°C$ unterworfen wird.

3. Wärmebehandlung für eine Buchse nach Anspruch 1, bei welcher in der Temperstufe der Reihe von Wärmebehandlungsverfahren die Buchse von der inneren Umfangsfläche her durch eine Induktionserwärmung erwärmt wird, um die innere Umfangsseite zu tempern.

4. Wärmebehandlung für eine Buchse nach Anspruch 1, bei welcher in der Temperstufe bei der Reihe von Wärmebehandlungsverfahren die äußere Umfangsseite der Buchse bei einer Temperatur niedriger als diejenige der inneren Umfangsseite getempert wird, indem die Leitwärme genutzt wird, die von der inneren Umfangsseite her übertragen wird.

**Revendications**

1. Procédé de traitement thermique pour des douilles ayant des surfaces circonférentielle intérieure et périphérique extérieure et utilisées dans des chenilles ou des tracteurs à chenilles sans fin, et étant capables d'être durcies par chauffage par induction, les douilles étant faites d'acier à moyen carbone faiblement allié, procédé dans lequel on chauffe par induction la douille, on refroidit la douille pour durcir la totalité de son épaisseur, et on fait revenir la douille, caractérisé en ce que le chauffage par induction de la douille est exécuté en chauffant la surface périphérique extérieure de la douille jusqu'à ce que la surface circonférentielle intérieure de celle-ci atteigne une température située dans la gamme de $A_{c3} \leq T \leq A_{c3} + 50\,^{\circ}C$, dans laquelle T est la température en $^{\circ}C$ atteinte en chauffant la surface circonférentielle intérieure, et $A_{c3}$ est la température de transformation en $^{\circ}C$ de l'acier faiblement allié, et en ce que l'opération de refroidissement est effectuée en refroidissant la douille à partir de sa surface périphérique extérieure.

2. Procédé de traitement thermique d'une douille suivant la revendication 1 dans lequel, au cours de l'opération de revenu de ladite série de procédés de traitement thermique, la douille est soumise à un revenu dans un four de réchauffage dans la gamme de température de 150 $^{\circ}C$ à 250 $^{\circ}C$.

3. Procédé de traitement thermique d'une douille suivant la revendication 1 dans lequel, au cours de l'opération de revenu de ladite série de procédés de traitement thermique, la douille est chauffée à partir de sa surface circonférentielle intérieure par chauffage par induction pour faire revenir la face circonférentielle intérieure.

4. Procédé de traitement thermique d'une douille suivant la revendication 1 dans lequel, au cours de l'opération de revenu de ladite série de procédés de traitement thermique, la face périphérique extérieure de la douille est revenue à une température inférieure à celle de la face circonférentielle intérieure en utilisant la chaleur de conduction transmise à partir de la face circonférentielle intérieure.

Fig 1

Fig 2

frequency of crack generation (No. cycle)

maximum applied load (Pmax. ton)

(b)
(c)
(a)

# Fig 3

# Fig 4

# Fig 5

distance from the inner circumferentail surface δz (mm)

residual stress (Kg / mm²)

Fig 6

Fig 7

EP 0 339 152 B1